# EUROPÄISCHE PATENTANMELDUNG

(11) **EP 3 001 080 A1**
(43) Veröffentlichungstag der Anmeldung: **30.03.2016**
(21) Anmeldenummer: 15183426.4
(22) Anmeldetag: 02.09.2015
(51) Int. Cl.: F16K 31/40, F16K 11/07

(54) **DRUCKREDUZIERVENTIL MIT GESONDERTEN RADIALBOHRUNGEN FÜR UNTERSCHIEDLICHE FLUIDSTRÖMUNGSPFADE**

(30) Priorität: 29.09.2014 DE 102014219634
(71) Anmelder: ROBERT BOSCH GMBH, 70442 Stuttgart (DE)
(72) Erfinder: Mueller, Thomas, 97854 Steinfeld (DE); Voth, Valentin, 63486 Bruchkoebel (DE); Habr, Klaus, 97828 Marktheidenfeld (DE); Neubauer, Ralf, 97816 Lohr (DE)
(74) Vertreter: Maiß, Harald

(57) **Zusammenfassung**

Die Erfindung betrifft ein Hydraulisches Einbauventil (10) mit einer Buchse (20) mit einer ersten Längsbohrung (24), die mittels einer stirnseitigen Öffnung eine Arbeitsanschlussstelle (21) bildet, wobei in der ersten Längsbohrung (24) ein Kolben (40) linearbeweglich aufgenommen ist, wobei die Buchse (20) im Bereich einer Zulaufanschlussstelle (22) von wenigstens einer radial zur Längsachse (11) verlaufenden ersten Radialbohrung (25) durchsetzt wird, wobei die Buchse (20) im Bereich einer Rücklaufanschlussstelle (23) von wenigstens einer radial zur Längsachse (11) verlaufenden zweiten Radialbohrung (26) durchsetzt wird, welche in Richtung der Längsachse (11) beabstandet zur wenigstens einen ersten Radialbohrung (25) angeordnet ist, wobei sich ein erster Fluidströmungspfad (12) von der Zulaufanschlussstelle (22) zu der Arbeitsanschlussstelle (21) erstreckt, wobei sich ein zweiter Fluidströmungspfad (13) von der Arbeitsanschlussstelle (21) zur Rücklaufanschlussstelle (23) erstreckt.

Erfindungsgemäß weist der Kolben (40) wenigstens eine dritte Radialbohrung (42) auf, welche radial zur Längsachse (11) verläuft, wobei sie Bestandteil des ersten Fluidströmungspfads (12) ist, wobei der Kolben (40) wenigstens eine vierte Radialbohrung (43) aufweist, welche radial zur Längsachse (11) verläuft, wobei sie Bestandteil des zweiten Fluidströmungspfads (13) ist, wobei sie in Richtung der Längsachse (11) beabstandet zur wenigstens einen dritten Radialbohrung (42) angeordnet ist.

## Beschreibung

Die Erfindung betrifft ein Einbauventil gemäß dem Oberbegriff von Anspruch 1.

Aus dem Katalog, der am 08.07.2014 unter der Internetadresse http://www.boschrexroth.com/RDSearch/rd/r 18111-02/rd18111-02 2005-06.pdf abrufbar war, ist ein hydraulisches Einbauventil in Form eines 3-Wege-Druckreduzierventils bekannt. Das Einbauventil hat eine Buchse, die zum Einbau in eine angepasste Aufnahmebohrung in einer übergeordneten Baugruppe vorgesehen ist. Die Buchse weist eine erste Längsbohrung auf, welche sich entlang einer Längsachse erstreckt. Eine stirnseitige Öffnung der ersten Längsbohrung bildet eine Arbeitsanschlussstelle des Einbauventils. In der ersten Längsbohrung ist ein Kolben linearbeweglich aufgenommen. Im Bereich einer Zulaufanschlussstelle wird die Buchse von mehreren radial zur Längsachse verlaufenden ersten Radialbohrungen durchsetzt. Im Bereich einer Rücklaufanschlussstelle wird die Buchse von mehreren radial zur Längsachse verlaufenden zweiten Radialbohrungen durchsetzt. Die ersten und die zweiten Radialbohrungen sind in Richtung der Längsachse mit Abstand zueinander angeordnet. Weiter ist ein erster Fluidströmungspfad vorgesehen, welcher sich von der Zulaufanschlussstelle zur Arbeitsanschlussstelle erstreckt, wobei sich ein zweiter Fluidströmungspfad von der Arbeitsanschlussstelle zur Rücklaufanschlussstelle erstreckt. Der Kolben ist so ausgebildet, dass abhängig von dessen Stellung der erste und/oder der zweite Fluidströmungspfad gesperrt sind, wobei sie im Übrigen offen sind.

Mit dem bekannten Einbauventil wird der Druck an der Arbeitsanschlussstelle auf einen vorgegebenen Wert eingeregelt, indem wahlweise Druckfluid von der Zulaufanschlussstelle über den ersten Fluidströmungspfad zur Arbeitsanschlussstelle oder von der Arbeitsanschlussstelle über den zweiten Fluidströmungspfad zur Rücklaufanschlussstelle geleitet wird. Für die Druckregelung wird insbesondere ausgenutzt, dass der Druck an der Arbeitsanschlussstelle den Kolben in Richtung der Längsachse belastet.

Die Aufgabe der Erfindung besteht darin, den maximal möglichen Durchflussstrom, insbesondere bei einer Durchströmung entlang des ersten Fluidströmungspfades, zu steigern.

Gemäß dem unabhängigen Anspruch wird vorgeschlagen, dass der Kolben wenigstens eine dritte Radialbohrung aufweist, welche radial zur Längsachse verläuft, wobei sie Bestandteil des ersten Fluidströmungspfads ist, wobei der Kolben wenigstens eine vierte Radialbohrung aufweist, welche radial zur Längsachse verläuft, wobei sie Bestandteil des zweiten Fluidströmungspfads ist, wobei sie in Richtung der Längsachse beabstandet zur wenigstens einen dritten Radialbohrung angeordnet ist. Damit stehen für den ersten und den zweiten Fluidströmungspfad unterschiedliche Radialbohrungen im Kolben zur Verfügung, die jeweils spezifisch an die zugeordneten Strömungsverhältnisse angepasst werden können. In der Folge steigt der maximal mögliche Durchflussstrom. Das Einbauventil ist vorzugsweise dazu eingerichtet, den Druck an der Arbeitsanschlussstelle durch Verstellung des Kolbens auf einen vorgegebenen Wert einzuregeln.

In den abhängigen Ansprüchen sind vorteilhafte Weiterbildungen und Verbesserungen der Erfindung angegeben.

Es ist bevorzugt, dass bezüglich der Längsachse zwischen der wenigstens einen ersten Radialbohrung und der wenigstens einen zweiten Radialbohrung wenigstens ein bezüglich der Längsachse ringförmiger erster Steg außen an der Buchse angeordnet ist. Durch den wenigstens einen ersten Steg werden die Zulauf- und die Rücklaufanschlussstelle voneinander abgegrenzt. Vorzugsweise sind zwei gesonderte erste Stege vorgesehen, zwischen denen ein erster Dichtring angeordnet ist, der in Dichtkontakt mit der Aufnahmebohrung bringbar ist.

Es ist bevorzugt, dass bezüglich der Längsachse zwischen der wenigstens einen dritten Radialbohrung und der wenigstens einen vierten Radialbohrung ein zweiter, bezüglich der Längsachse ringförmiger Steg vorgesehen ist, der wahlweise außen am Kolben oder innen an der ersten Längsbohrung angeordnet ist, wobei er dichtend am jeweils anderen Teil, Buchse oder Kolben, anliegt. Durch den zweiten Steg werden der erste und der zweite Fluidströmungspfad voneinander abgegrenzt. Druckfluid, welches entlang dem ersten Fluidströmungspfad fließt, fließt daher ausschließlich über die wenigstens eine dritte Radialbohrung. Druckfluid, welches entlang dem zweiten Fluidströmungspfad fließt, fließt ausschließlich über die wenigstens eine vierte Radialbohrung.

Es ist bevorzugt, dass der Kolben eine zweite Längsbohrung aufweist, welche sich entlang der Längsachse erstreckt, wobei sie zur Arbeitsanschlussstelle hin offen ist, wobei die wenigstens eine dritte und die wenigstens eine vierte Radialbohrung in die zweite Längsbohrung einmünden, wobei die zweite Längsbohrung Bestandteil des ersten und des zweiten Fluidströmungspfades ist. Hierdurch kann auf kostengünstige und strömungswiderstandsarme Weise eine Verbindung zwischen der Arbeitsanschlussstelle und der dritten und der vierten Radialbohrung bereitgestellt werden.

Es ist bevorzugt, dass eine vorgespannte Feder vorgesehen ist, welche am Kolben derart anliegt, dass er im Sinne einer Bewegung zur Arbeitsanschlussstelle hin belastet ist. Durch die Feder wird der Kolben in eine erste Endstellung bewegt, wenn keine Fluidkräfte auf diesen einwirken. Vorzugsweise ist der erste Fluidströmungspfad in der ersten Endstellung offen, wobei der zweite Fluidströmungspfad in der ersten Endstellung verschlossen ist.

Es ist bevorzugt, dass der Kolben eine Anschlagfläche aufweist, welche senkrecht zur Längsachse ausgerichtet ist, wobei sie in Richtung der Arbeitsanschlussstelle weist, wobei die Buchse eine zugordnete Gegenanschlagfläche aufweist, welche in einer ersten Endstellung des Kolbens an der Anschlagfläche anliegt. Die Anschlagfläche und die Gegenanschlagfläche definieren die Lage der ersten Endstellung des Kolbens, welche durch die oben angesprochene Feder eingestellt wird.

Es ist bevorzugt, dass eine bezüglich der Längsachse ringförmige erste Steuerkante vorgesehen ist, welche wahlweise außen am Kolben oder innen an der ersten Längsbohrung angeordnet ist, wobei die erste Steuerkante Bestandteil des ersten Fluidströmungspfades ist. Vorzugsweise bildet die erste Steuerkante entweder zusammen mit der wenigstens einen dritten oder der wenigstens einen ersten Radialbohrung eine Blende, deren freie Querschnittsfläche sich abhängig von der Stellung des Kolbens ändert. Dementsprechend kann der erste Fluidströmungspfad durch Bewegung des Kolbens wahlweise geöffnet oder gesperrt werden.

Es ist bevorzugt, dass eine bezüglich der Längsachse ringförmige zweite Steuerkante vorgesehen ist, welche wahlweise außen am Kolben oder innen an der ersten Längsbohrung angeordnet ist, wobei die zweite Steuerkante Bestandteil des zweiten Fluidströmungspfades ist. Vorzugsweise bildet die erste Steuerkante entweder zusammen mit der wenigstens einen vierten oder der wenigstens einen zweiten Radialbohrung eine Blende, deren freie Querschnittsfläche sich abhängig von der Stellung des Kolbens ändert. Dementsprechend kann der zweite Fluidströmungspfad durch Bewegung des Kolbens wahlweise geöffnet oder gesperrt werden. Die erste und die zweite Steuerkante sind in Richtung der Längsachse vorzugsweise mit Abstand zueinander angeordnet. Die erste und die zweite Steuerkante sind vorzugsweise am gleichen Teil angeordnet und höchst vorzugsweise am gleichen Teil wie der zweite Steg.

Es ist bevorzugt, dass die Arbeitsanschlussstelle über eine Drossel und ein verstellbares Vorsteuerventil mit der Rücklaufanschlussstelle verbunden sind, wobei ein Stelldruck zwischen der Drossel und dem Vorsteuerventil den Kolben in Richtung der Arbeitsanschlussstelle belastet. Mit dem Vorsteuerventil kann der Soll-Druck eingestellt werden, auf den der Druck an der Arbeitsanschlussstelle eingeregelt wird. Während des Regelvorgangs bewegt sich der Kolben in eine Lage, in der die Druckkraft, welche der Druck an der Arbeitsanschlussstelle auf den Kolben ausübt, gleich der Druckkraft ist, welche der Stelldruck auf den Kolben ausübt. Der Stelldruck kann dabei durch Verstellung des Vorsteuerventils verändert werden. Hierfür wird vorzugsweise eine Stelleinrichtung verwendet, welche eine Magnetspule aufweist.

Es ist bevorzugt, dass der Kolben auf der von der zweiten Längsbohrung abgewandten Seite eine dritte Längsbohrung aufweist, welche sich entlang der Längsachse erstreckt, wobei die zweite und die dritte Längsbohrung über die Drossel miteinander verbunden sind. Hierdurch wird erreicht, dass der Stelldruck in der gewünschten Richtung auf den Kolben einwirkt. Die Drossel ist vorzugsweise zwischen der zweiten und der dritten Längsbohrung im Kolben angeordnet.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: einen Längsschnitt eines erfindungsgemäßen hydraulischen Einbauventils; und
- Fig. 2: einen vergrößerten Ausschnitt von Fig. 1 im Bereich des Kolbens.

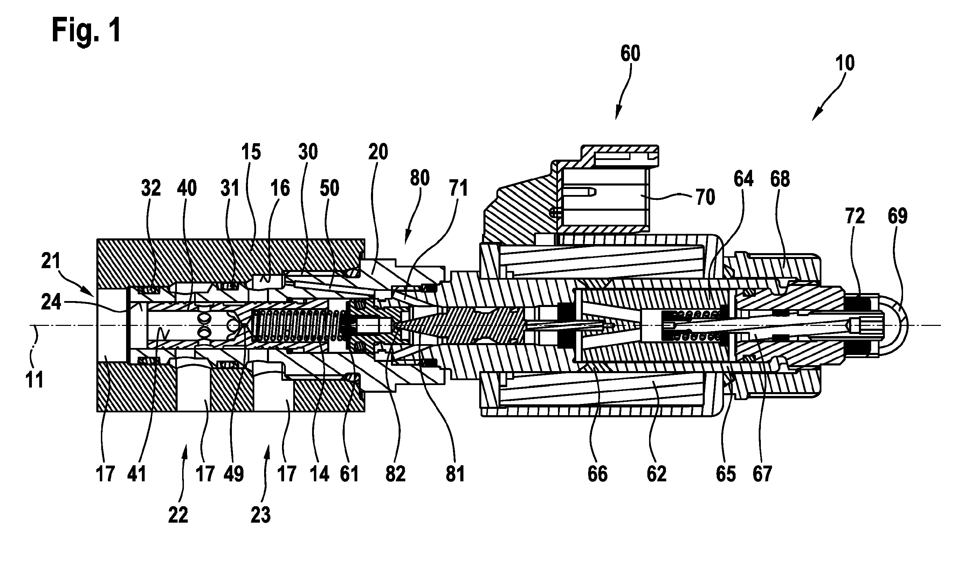

Fig. 1 zeigt einen Längsschnitt eines erfindungsgemäßen hydraulischen Einbauventils 10. Das Einbauventil 10 ist in eine übergeordnete Baugruppe 15 eingebaut, bei der es sich beispielsweise um einen hydraulischen Ventilblock handeln kann. Die übergeordnete Baugruppe 15 hat eine Aufnahmebohrung 16, welche in Form einer Stufenbohrung ausgebildet ist, die sich entlang einer Längsachse 11 erstreckt.

Die Buchse 20 des Einbauventils 10 ist in die Aufnahmebohrung 16 eingebaut, wobei sie über das Befestigungsgewinde 30 fest und dicht mit dieser verschraubt ist. Außen an der Buchse 20 sind eine Arbeitsanschlussstelle 21; eine Zulaufanschlussstelle 22 und eine Rücklaufanschlussstelle 23 vorgesehen, denen jeweils ein Fluidkanal 17 in der übergeordneten Baugruppe 15 zugeordnet ist. Die Zulauf- und die Rücklaufanschlussstelle 22; 23 sind über den ersten Dichtring 31 fluiddicht voneinander abgegrenzt. Die Arbeitsanschlussstelle 21 und die Zulaufanschlussstelle 22 sind über den zweiten Dichtring 32 fluiddicht voneinander abgegrenzt.

Innen hat die Buchse 20 eine erste Längsbohrung 24, die kreiszylindrisch bezüglich der Längsachse 11 ausgebildet ist. Die stirnseitige Öffnung der ersten Längsbohrung 24 bildet die erste Arbeitsanschlussstelle 21. In der ersten Längsbohrung 24 ist ein Kolben 40 in Richtung der Längsachse 11 linearbeglich aufgenommen. Der Kolben 40 wird von einer vorgespannten Feder 14, die als Schraubenfeder ausgeführt ist, in Richtung der Arbeitsanschlussstelle 21 gedrückt. Auf der vom Kolben 40 abgewandten Seite stützt sich die Feder 14 auf einem Federteller 61 ab, der wiederum an einem Ventilsitz 82 anliegt, welcher unbeweglich in der Buchse 40 aufgenommen ist.

Der Ventilsitz 82 bildet zusammen mit dem zugehörigen Ventilkegel 81 ein Vorsteuerventil 80. Die freie Querschnittsfläche dieses Sitzventils kann mittels einer Stelleinrichtung 60 stufenlos verstellt werden. Der Ventilkegel 81 ist in dem Polrohr 65 der Stelleinrichtung 60 in Richtung der Längsachse 11 linearbeweglich geführt. Insgesamt ergibt sich damit ein Fluidströmungspfad, der von der Arbeitsanschlussstelle 21 über eine Drossel 49 im Kolben 40, über eine Längsbohrung im Federteller 61, über den Ventilsitz 82 und weiter über den ersten Verbindungskanal 71 im Polrohr 65 und den zweiten Verbindungskanal 50 in der Buchse 20 zur Rücklaufanschlussstelle 23 führt. Dabei kann durch Verstellung des Vorsteuerventils 80 in dem Raum, in dem sich die Feder 14 befindet, ein Stelldruck eingestellt werden, welcher den Kolben 40 in Richtung der Arbeitsanschlussstelle 21 belastet.

In dem Polrohr 65 der Stelleinrichtung 60 ist ein Magnetanker 64 in Richtung der Längsachse 11 beweglich aufgenommen. Der Magnetanker 64 besteht vorzugsweise aus einem ferromagnetischen Material, wie beispielsweise Weicheisen, so dass er mittels der Magnetspule 62 magnetisiert werden kann. Der Magnetanker 64 ist mit dem Ventilkegel 81 in Richtung der Längsachse 11 bewegungsgekoppelt. Dabei werden der Magnetanker 64 und der Ventilkegel 81 vom Druck, der von der Arbeitsanschlussstelle 21 her wirkt, in Fig. 1 nach rechts bewegt, so dass das Vorsteuerventil 80 öffnet. Dieser Kraft wirkt die Magnetkraft entgegen, welche die Magnetspule 62 auf den Magnetanker 64 ausübt. In diesem Zusammenhang ist auf den Flussunterbrechungsabschnitt 66 in dem Polrohr 65 hinzuweisen, dessen Lage die Richtung der genannten Magnetkraft beeinflusst. Bei dem Flussunterbrechungsabschnitt kann es sich um nicht magnetisierbares Material wie beispielsweise Kupfer handeln, wobei das verbleibende Polrohr aus ferromagnetischem Material besteht. Es ist aber auch möglich, dass ein insgesamt ferromagnetisches Polrohr im Flussunterbrechungsabschnitt 66 eine sehr geringe Wandstärke aufweist, so dass der Flussunterbrechungsabschnitt durch die Magnetspule 62 in die Sättigung gebracht werden kann.

Die Magnetspule 62 wird über die Anschlussbuchse 70 mit Strom versorgt. Weiter ist ein verstellbarer Endanschlag 67 für den Magnetanker 64 vorgesehen, mit dem der maximale Öffnungsquerschnitt des Vorsteuerventils 80 eingestellt werden kann. Die entsprechende Stellschraube ragt aus dem Polrohr 65 heraus, wobei sie mit der demontierbaren Schutzkappe 69 gegen Beschädigung geschützt ist. Die Einstellung des Endanschlags 67 ist mit einer Kontermutter 72 gesichert. Weiter ist auf das Polrohr 65 eine Halteschraube 68 aufgeschraubt, mit der die Magnetspule 62 auf dem Polrohr 65 gehalten wird.

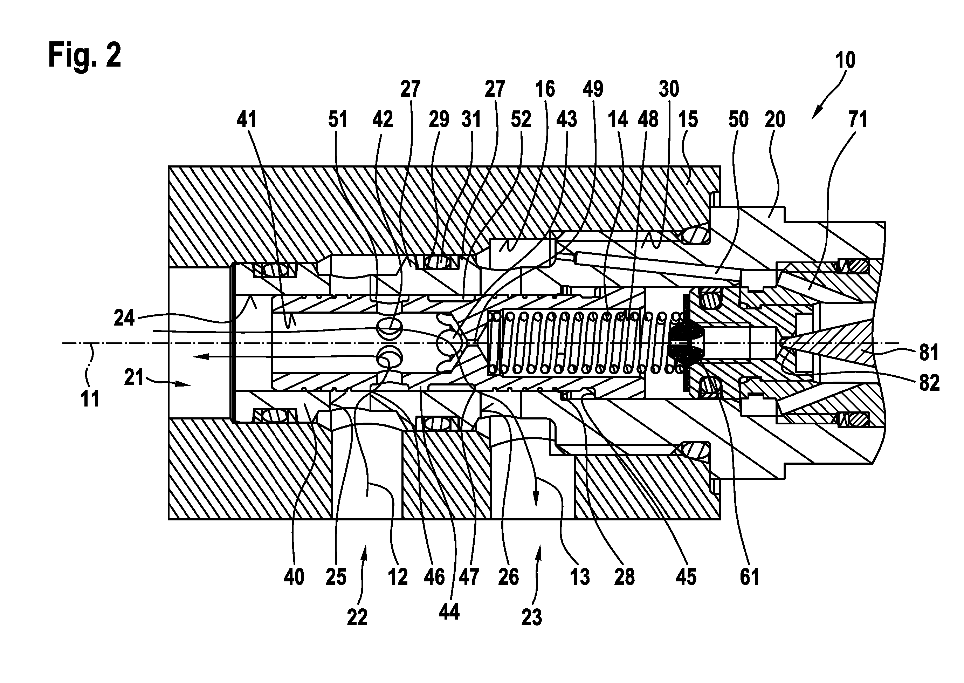

Fig. 2 zeigt einen vergrößerten Ausschnitt von Fig. 1 im Bereich des Kolbens 40. Der Kolben 40 hat eine zweite und eine dritte Längsbohrung 41; 48, die an gegenüberliegenden Längsenden des Kolbens 40 angeordnet sind. Die zweite und die dritte Längsbohrung 41; 48 sind kreiszylindrisch bezüglich der Längsachse 11 ausgebildet, wobei sie in etwa den gleichen Durchmesser aufweisen. Zwischen der zweiten und der dritten Längsbohrung 41; 48 ist die oben angesprochene Drossel 49 im Kolben 40 angeordnet, so dass Druckfluid von der Arbeitsanschlussstelle 21 über die zweite Längsbohrung 41, die Drossel 49 und die dritte Längsbohrung 48 zum Ventilsitz 82 fließen kann. Der Durchmesser der Drossel 49 ist so klein ausgebildet, dass sich an der Drossel ein Druckabfall ergibt, der über die Einstellung des Vorsteuerventils 80 gesteuert werden kann. Der Druck in der dritten Längsbohrung 48 ist der oben angesprochene Stelldruck, welcher den Kolben 40 in Richtung der Arbeitsanschlussstelle 21 belastet. In der dritten Längsbohrung 48 ist außerdem die Feder 14 aufgenommen, so dass diese seitlich geführt ist.

Im Bereich der zweiten Längsbohrung 41 sind mehrere dritte Radialbohrungen 42 und mehrere vierte Radialbohrungen 43 am Kolben 40 vorgesehen. Die dritten und die vierten Radialbohrungen 42; 43 sind jeweils geleichförmig verteilt über den Umfang des Kolbens 40 angeordnet, wobei sie in Richtung der Längsachse 11 mit Abstand voneinander angeordnet sind. Die dritten Radialbohrungen 42 sind dabei näher an der Arbeitsanschlussstelle 21 angeordnet als die vierten Radialbohrungen 43. Den dritten und den vierten Radialbohrungen 42; 43 ist jeweils eine Nut 51; 52 zugeordnet, welche außen am Kolben 40 ringförmig umläuft. Die beiden Nuten 51; 52 begrenzen dabei gemeinsam einen zweiten Steg 44 am Kolben 40, der zwischen den dritten und den vierten Radialbohrungen 42; 43 angeordnet ist, wobei er dichtend an der ersten Längsbohrung 24 anliegt. Der zweite Steg 44 grenzt den ersten und den zweiten Fluidströmungspfad 12; 13 voneinander ab.

Der erste Fluidströmungspfad 12 verläuft von der Zulaufanschlussstelle 22 über mehrere erste Radialbohrungen 25 in der Büchse 20, über die Nut 51, über die dritten Radialbohrungen 42 im Kolben 40, über die zweite Längsbohrung 41 zur Arbeitsanschlussstelle 21. Der zweite Fluidströmungspfad 13 verläuft von der Arbeitsanschlussstelle 21 über die zweite Längsbohrung 41, über die vierten Radialbohrungen 43 im Kolben 40, über die Nut 52, über die zweiten Radialbohrungen 26 in der Buchse 20 zur Rücklaufanschlussstelle 23. Die ersten und die zweiten Radialbohrungen 25; 26 sind dabei gleichförmig verteilt über den Umfang der Buchse 20 angeordnet.

Die Nut 51 bildet auf der vom zweiten Steg 44 abgewandten Seite eine ringförmig um den Kolben 40 umlaufende erste Steuerkante 46. Die erste Steuerkante 46 begrenzt zusammen mit den ersten Radialbohrungen 25 eine verstellbare Blende, deren freie Querschnittsfläche sich stetig verändert, wenn der Kolben 40 bewegt wird. Sie wird dabei größer, wenn der Kolben auf die Arbeitsanschlussstelle 21 zu bewegt wird. Die Nut 52 bildet auf der vom zweiten Steg 44 abgewandten Seite eine ringförmig um den Kolben 40 umlaufende zweite Steuerkante 47. Die zweite Steuerkante 47 begrenzt zusammen mit den zweiten Radialbohrungen 26 eine verstellbare Blende, deren freie Querschnittsfläche sich stetig verändert, wenn der Kolben 40 bewegt wird. Sie wird dabei größer, wenn der Kolben 40 von der Arbeitsanschlussstelle 21 weg bewegt wird. Das Einbauventil 10 ist dabei so ausgelegt, dass entweder der erste oder der zweite Fluidströmungspfad 12; 13 geöffnet sind, wobei in der in Fig. 2 dargestellten Mittelstellung beide Fluidströmungspfade 12; 13 gesperrt sind.

Weiter ist auf die beiden ersten Stege 27 hinzuweisen, die außen an der Buchse 20 angeordnet sind, wobei sie ringförmig um die Buchse 20 umlaufen. Die ersten Stege 27 begrenzen zusammen eine Dichtungsnut 29, in der ein erster Dichtring 31 aufgenommen ist, welcher die Zulaufanschlussstelle 22 und die Rücklaufanschlussstelle 23 fluiddicht voneinander abgrenzt.

Weiter ist auf die Anschlagfläche 45 hinzuweisen, welche auf der von der Arbeitsanschlussstelle 21 abgewandten Seite des Kolbens 40 angeordnet ist. Die Anschlagfläche 45 ist senkrecht zur Längsachse 11 ausgerichtet, wobei sie auf die Arbeitsanschlussstelle 21 zu weist. An der Buchse 20 ist eine angepasste Gegenanschlagfläche 28 angeordnet, welche die Anschlagfläche 45 berührt, wenn sich der Kolben 40 in der ersten Endstellung befindet, in der er den geringsten Abstand zur Arbeitsanschlussstelle 21 aufweist. In der gegenüberliegenden zweiten Endstellung liegt der Kolben 40 an dem Federteller 61 an.

Im drucklosen Zustand des Einbauventils 10 wird der Kolben 40 von der Feder 14 in die erste Endstellung gedrückt, so dass der erste Fluidströmungspfad 12 offen und der zweite Fluidströmungspfad 13 gesperrt ist. Damit kann Druckfluid von der Zulaufanschlussstelle 22 zur Arbeitsanschlussstelle 21 fließen. Hierdurch steigt typischerweise der Druck an der Arbeitsanschlussstelle 21 an, wobei in der Folge der Ventilkegel 81 vom Ventilsitz 82 abgehoben wird. Dabei muss die Kraft der Stelleinrichtung (Nr. 60 in Fig. 1) überwunden werden. In der Folge ergibt sich ein Fluidstrom von der Arbeitsanschlussstelle 21 zur Rücklaufanschlussstelle 23, der einen Druckabfall an der Drossel 49 bewirkt. Dies hat zur Folge, dass sich der Kolben 40 von der Arbeitsanschlussstelle 21 weg bewegt. Dadurch schließt der erste Fluidströmungspfad 12, wobei der zweite Fluidströmungspfad 13 geöffnet wird.

Dementsprechend kann Druckfluid von der Arbeitsanschlussstelle 21 zur Rücklaufanschlussstelle 23 fließen, so dass der Druck an der Arbeitsanschlussstelle 21 sinkt. Hierdurch sinkt auch der Stelldruck in der dritten Längsbohrung 48. Wenn dieser nicht mehr ausreicht, um das Vorsteuerventil 80 offen zu halten, verschwindet der Druckabfall an der Drossel 49 und der Kolben 40 bewegt sich auf die Arbeitsanschlussstelle 21 zu. Damit öffnet wieder der erste Fluidströmungspfad 12, wobei der zweite Fluidströmungspfad 13 schließt. Der Druck an der Arbeitsanschlussstelle 21 wird im Ergebnis gerade auf den Druck eingeregelt, der notwendig ist, um das Vorsteuerventil 80 entgegen der Stellkraft der Stelleinrichtung in einer leicht geöffneten Stellung zu halten.

### Bezugszeichenliste

- 10: Einbauventil
- 11: Längsachse
- 12: erster Fluidströmungspfad
- 13: zweiter Fluidströmungspfad
- 14: Feder
- 15: übergeordnete Baugruppe
- 16: Aufnahmebohrung
- 17: Fluidkanal

- 20: Buchse
- 21: Arbeitsanschlussstelle
- 22: Zulaufanschlussstelle
- 23: Rücklaufanschlussstelle
- 24: erste Längsbohrung
- 25: erste Radialbohrung
- 26: zweite Radialbohrung
- 27: erster Steg
- 28: Gegenanschlagfläche
- 29: Dichtungsnut
- 30: Befestigungsgewinde
- 31: erster Dichtring
- 32: zweiter Dichtring

- 40: Kolben
- 41: zweite Längsbohrung
- 42: dritte Radialbohrung
- 43: vierte Radialbohrung
- 44: zweiter Steg
- 45: Anschlagfläche
- 46: erste Steuerkante
- 47: zweite Steuerkante
- 48: dritte Längsbohrung
- 49: Drossel
- 50: zweiter Verbindungskanal
- 51: umlaufende Nut
- 52: umlaufende Nut

- 60: Stelleinrichtung
- 61: Federteller mit Längsbohrung
- 62: Magnetspule
- 64: Magnetanker
- 65: Polrohr
- 66: Flussunterbrechungsabschnitt
- 67: verstellbarer Endanschlag
- 68: Halteschraube für Magnetspule
- 69: Schutzkappe für den Endanschlag
- 70: Anschlussbuchse
- 71: erster Verbindungskanal
- 72: Kontermutter

- 80: Vorsteuerventil
- 81: Ventilkegel
- 82: Ventilsitz

## Patentansprüche

1. Hydraulisches Einbauventil (10) mit einer Buchse (20), die eine erste Längsbohrung (24) aufweist, welche sich entlang einer Längsachse (11) erstreckt, wobei die erste Längsbohrung (24) mittels einer stirnseitigen Öffnung eine Arbeitsanschlussstelle (21) bildet, wobei in der ersten Längsbohrung (24) ein Kolben (40) linearbeweglich aufgenommen ist, wobei die Buchse (20) im Bereich einer Zulaufanschlussstelle (22) von wenigstens einer radial zur Längsachse (11) verlaufenden ersten Radialbohrung (25) durchsetzt wird, wobei die Buchse (20) im Bereich einer Rücklaufanschlussstelle (23) von wenigstens einer radial zur Längsachse (11) verlaufenden zweiten Radialbohrung (26) durchsetzt wird, welche in Richtung der Längsachse (11) beabstandet zur wenigstens einen ersten Radialbohrung (25) angeordnet ist, wobei sich ein erster Fluidströmungspfad (12) von der Zulaufanschlussstelle (22) zu der Arbeitsanschlussstelle (21) erstreckt, wobei sich ein zweiter Fluidströmungspfad (13) von der Arbeitsanschlussstelle (21) zur Rücklaufanschlussstelle (23) erstreckt, wobei der Kolben (40) so ausgebildet ist, dass, abhängig von dessen Stellung, der erste und/oder der zweite Fluidströmungspfad (12; 13) gesperrt sind, wobei sie im Übrigen offen sind,
**dadurch gekennzeichnet, dass** der Kolben (40) wenigstens eine dritte Radialbohrung (42) aufweist, welche radial zur Längsachse (11) verläuft, wobei sie Bestandteil des ersten Fluidströmungspfads (12) ist,
wobei der Kolben (40) wenigstens eine vierte Radialbohrung (43) aufweist, welche radial zur Längsachse (11) verläuft, wobei sie Bestandteil des zweiten Fluidströmungspfads (13) ist, wobei sie in Richtung der Längsachse (11) beabstandet zur wenigstens einen dritten Radialbohrung (42) angeordnet ist.

2. Hydraulisches Einbauventil nach Anspruch 1,
wobei bezüglich der Längsachse (11) zwischen der wenigstens einen ersten Radialbohrung (25) und der wenigstens einen zweiten Radialbohrung (26) wenigstens ein bezüglich der Längsachse (11) ringförmiger erster Steg (27) außen an der Buchse (20) angeordnet ist.

3. Hydraulisches Einbauventil nach einem der vorstehenden Ansprüche,
wobei bezüglich der Längsachse (11) zwischen der wenigstens einen dritten Radialbohrung (42) und der wenigstens einen vierten Radialbohrung (43) ein zweiter, bezüglich der Längsachse (11) ringförmiger Steg (44) vorgesehen ist, der wahlweise außen am Kolben (40) oder innen an der ersten Längsbohrung (24) angeordnet ist, wobei er dichtend am jeweils anderen Teil, Buchse (20) oder Kolben (40), anliegt.

4. Hydraulisches Einbauventil nach einem der vorstehenden Ansprüche,
wobei der Kolben (40) eine zweite Längsbohrung (41) aufweist, welche sich entlang der Längsachse (11) erstreckt, wobei sie zur Arbeitsanschlussstelle (21) hin offen ist, wobei die wenigstens eine dritte und die wenigstens eine vierte Radialbohrung (42; 43) in die zweite Längsbohrung (41) einmünden, wobei die zweite Längsbohrung (41) Bestandteil des ersten und des zweiten Fluidströmungspfades (12; 13) ist.

5. Hydraulisches Einbauventil nach einem der vorstehenden Ansprüche,
wobei eine vorgespannte Feder (14) vorgesehen ist, welche am Kolben (40) derart anliegt, dass er im Sinne einer Bewegung zur Arbeitsanschlussstelle (21) hin belastet ist.

6. Hydraulisches Einbauventil nach einem der vorstehenden Ansprüche,
wobei der Kolben (40) eine Anschlagfläche (45) aufweist, welche senkrecht zur Längsachse (11) ausgerichtet ist, wobei sie in Richtung der Arbeitsanschlussstelle (21) weist, wobei die Buchse (20) eine zugordnete Gegenanschlagfläche (28) aufweist, welche in einer ersten Endstellung des Kolbens (40) an der Anschlagfläche (45) anliegt.

7. Hydraulisches Einbauventil nach einem der vorstehenden Ansprüche,
wobei eine bezüglich der Längsachse (11) ringförmige erste Steuerkante (46) vorgesehen ist, welche wahlweise außen am Kolben (40) oder innen an der ersten Längsbohrung (24) angeordnet ist, wobei die erste Steuerkante (46) Bestandteil des ersten Fluidströmungspfades (12) ist.

8. Hydraulisches Einbauventil nach einem der vorstehenden Ansprüche,
wobei eine bezüglich der Längsachse ringförmige zweite Steuerkante (47) vorgesehen ist, welche wahlweise außen am Kolben (40) oder innen an der ersten Längsbohrung (24) angeordnet ist, wobei die zweite Steuerkante (47) Bestandteil des zweiten Fluidströmungspfades (13) ist.

9. Hydraulisches Einbauventil nach einem der vorstehenden Ansprüche,
wobei die Arbeitsanschlussstelle (21) über eine Drossel (49) und ein verstellbares Vorsteuerventil (80) mit der Rücklaufanschlussstelle (23) verbunden sind, wobei ein Stelldruck zwischen der Drossel (49) und dem Vorsteuerventil (80) den Kolben (40) in Richtung der Arbeitsanschlussstelle (21) belastet.

10. Hydraulisches Einbauventil nach Anspruch 9, rückbezogen auf Anspruch 4,
wobei der Kolben (40) auf der von der zweiten Längsbohrung (41) abgewandten Seite eine dritte Längsbohrung (48) aufweist, welche sich entlang der Längsachse (11) erstreckt, wobei die zweite und die dritte Längsbohrung (41; 48) über die Drossel (49) miteinander verbunden sind.
